# EUROPÄISCHE PATENTSCHRIFT

(11) **EP 4 131 920 B1**
(45) Veröffentlichungstag und Bekanntmachung des Hinweises auf die Patenterteilung: **15.01.2025**
(21) Anmeldenummer: 22186178.4
(22) Anmeldetag: 21.07.2022
(51) Int. Cl.: H04N 23/60, H04N 23/56

(54) **VORRICHTUNG UND VERFAHREN ZUM ERZEUGEN PHOTOMETRISCHER STEREOBILDER UND EINES FARBBILDES**
DEVICE AND METHOD FOR GENERATING PHOTOMETRIC STEREO IMAGES AND A COLOUR IMAGE
DISPOSITIF ET PROCÉDÉ DE GÉNÉRATION D'UNE IMAGE STÉRÉO PHOTOMÉTRIQUE ET D'UNE IMAGE COULEUR

(30) Priorität: 06.08.2021 DE 102021004071
(43) Veröffentlichungstag der Anmeldung: 08.02.2023
(73) Patentinhaber: Baumer Inspection GmbH, 78467 Konstanz (DE)
(72) Erfinder: Diehl, Hans-Peter, 78464 Konstanz (DE)
(74) Vertreter: Strauss, Steffen

(56) Entgegenhaltungen:
- US-A1- 2018 328 855
- RAJARSHI RAY ET AL: "Error Analysis of Surface Normals Determined by Radiometry", IEEE TRANSACTIONS ON PATTERN ANALYSIS AND MACHINE INTELLIGENCE, IEEE COMPUTER SOCIETY, USA, vol. 30, no. 6, 1 November 1983 (1983-11-01), pages 631 - 645, XP011242705, ISSN: 0162-8828

## Beschreibung

Die vorliegende Erfindung betrifft eine Vorrichtung und ein Verfahren zum Erzeugen photometrischer Stereobilder und eines Farbbildes von einem relativ zu einer Bildsensoranordnung bewegten Objekt.

In zahlreichen industriellen und wissenschaftlichen Anwendungen besteht ein Bedarf dafür, Objekte mithilfe eines bildgebenden Verfahrens zu untersuchen. Im Bereich der Fertigungsindustrie kann es sich bei den Objekten beispielsweise um einzelne oder mehrere Produkte handeln. Damit Ausschuss besser erkannt und aussortiert werden kann, werden oft Bildaufnahmen der Produkte aufgenommen und dahingehend ausgewertet, ob das jeweilige Produkt vorgegebene Produktspezifikationen einhält.

Die Produktspezifikationen können beispielsweise Anforderungen an die Oberflächenbeschaffenheit der Produkte stellen. Häufig ist es beispielsweise nötig, das Vorhandensein von Unebenheiten oder Kratzern auszuschließen. In anderen Anwendungen kann wiederum gefordert sein, dass ein auf den Produkten angebrachtes Prägungsmuster vollständig und sachgemäß geprägt ist. In photometrischen Stereobildern, wie beispielsweise Neigungsbildern, Texturbildern, Krümmungsbildern, Gradientenbildern oder Höhenbildern lassen sich derartige dreidimensional bzw. räumlich ausgeprägte Merkmale von Objekten gut sichtbar machen und deshalb leichter untersuchen.

Oft werden in den Produktspezifikationen auch Vorgaben zu zweidimensionalen bzw. flächig ausgeprägten Merkmalen, wie beispielsweise der Farbgebung, gemacht. Beispielsweise sind ungewollte Verfärbungen zu erkennen oder die farbliche Übereinstimmung eines Aufdruckes auf den Objekten mit einer Druckvorlage sicherzustellen. Für diesen Zweck müssen Farbbilder der Objekte aufgenommen werden. Dazu werden meist Farbsensoren oder Farbkameras eingesetzt, die jedoch vor allem durch ihre vergleichsweise hohen Anschaffungskosten nachteilig sind. Eine Vorrichtung zum Erzeugen photometrischer Stereobilder und eines Farbbildes ist zum Beispiel aus der US 2018 / 0328855 A1 bekannt. Ferner ist aus Rajarshi Ray, et al. "Error Analysis of Surface Normals Determined by Radiometry"; IEEE Transactions on Pattern Analysis and Machine Intelligence, IEEE Computer Society, USA, Bd. 30, Nr. 6. 01. Nov. 1983, S. 631-645, XP011242705, ISSN: 0162-8828 ein Verfahren zur Bestimmung geometrischer Fehler bei der Oberflächenerfassung bekannt.

Der vorliegenden Erfindung liegt deshalb die Aufgabe zugrunde, Möglichkeiten zu schaffen, die es erlauben, Bilder der eingangs genannten Art mit geringem Kostenaufwand, insbesondere ohne die Nutzung von Farbsensoren oder Farbkameras zu erzeugen.

Die Aufgabe wird erfindungsgemäß durch eine Vorrichtung zum Erzeugen von photometrischen Stereobildern und des Farbbildes gelöst, wie sie in dem angehängten Anspruch 1 definiert wird.

Vorteilhafterweise kann mit der erfindungsgemäßen Vorrichtung durch die unterschiedlichen Beleuchtungsrichtungen der Beleuchtungspulse eine photometrische Stereobeleuchtung erzeugt werden, die aufgrund der unterschiedlichen Wellenlängenbereiche der Beleuchtungspulse gleichzeitig eine farbliche Unterscheidung ermöglicht.

Bevorzugt umfasst die erfindungsgemäße Vorrichtung einen Bilddatenprozessor zur Berechnung photometrischer Stereobilder und eines Farbbildes von einem mit einer vorbestimmten Relativgeschwindigkeit relativ zu einer Bildsensoranordnung mit vorbestimmter Sensorgeometrie bewegten Objekt, wobei der Bilddatenprozessor ausgestaltet ist, die photometrischen Stereobilder und das Farbbild aus wenigstens vier Bilddatensätzen zu berechnen, wobei mindestens drei der Bilddatensätze Helligkeitswerte unterschiedlicher Stellen eines Bereichs des in jeweils unterschiedlichen Wellenlängenbereichen beleuchteten Objekts repräsentieren und wobei mindestens zwei der Bilddatensätze Helligkeitswerte dieser Stellen des aus jeweils unterschiedlichen Beleuchtungsrichtungen beleuchteten Objekts repräsentieren, wobei der Bilddatenprozessor ausgestaltet ist, anhand von der Sensorgeometrie repräsentierenden Sensordaten und die Relativgeschwindigkeit repräsentierenden Geschwindigkeitswerten aus den Bilddatensätzen mit unterschiedlichen Wellenlängenbereichen Helligkeitswerte von Einzelpixeln derselben Stelle des Objektbereichs als ein mehrfarbiges Pixeltupel und aus den Bilddatensätzen mit unterschiedlichen Beleuchtungsrichtungen Helligkeitswerte von Einzelpixeln derselben Stelle des Objektbereichs als ein mehrdirektionales Pixeltupel zusammenzufassen, und wobei der Bilddatenprozessor ausgestaltet ist, anhand jedes mehrfarbigen Pixeltupels und der Wellenlängenbereiche einen Bildpunkt des Farbbildes zu erzeugen und anhand jedes mehrdirektionalen Pixeltupels und der Beleuchtungsrichtungen einen Bildpunkt eines photometrischen Stereobildes zu erzeugen.

Bei den Helligkeitswerten der Bilddatensätze handelt es sich insbesondere um von Pixeln der Bildsensoranordnung gemessene Helligkeitswerte oder Intensitätswerte. Mit anderen Worten enthält jeder Bilddatensatz unter Beleuchtung in einem vorbestimmten Wellenlängenbereich aus einer vorbestimmten Beleuchtungsrichtung von Pixeln der Bildsensoranordnung gemessene Helligkeitswerte oder Intensitätswerte, wobei sich mindestens drei der Bilddatensätze durch die darin repräsentierten Wellenlängenbereiche unterscheiden und wobei sich mindestens zwei der Bilddatensätze durch die darin repräsentierten Beleuchtungsrichtungen unterscheiden. Die konkreten Angaben über die unterschiedlichen Wellenlängenbereiche und Beleuchtungsrichtungen müssen jedoch nicht aus der Bildsensoranordnung stammen, da es reicht, wenn diese Angaben den Bilddatensätzen und insbesondere den darin enthaltenen Helligkeitswerten lediglich zuordenbar sind.

Sofern sämtliche Helligkeitswerte je einem Wellenlängenbereich eindeutig zuordenbar sind, können sie vorteilhafterweise als monochromatische Grauwerte vorliegen und die Bildpunkte des Farbbildes sind trotzdem wie folgt rekonstruierbar. In Kombination mit dem dazugehörigen Wellenlängenbereich entspricht der Helligkeitswert eines Einzelpixels jedes mehrfarbigen Pixeltupels zwangsläufig dem Helligkeitswert eines dazu korrespondierenden Bildpunktes eines Farbkanals des Farbbildes, wenn der Farbkanal den besagten Wellenlängenbereich wiedergibt. Die Überlagerung der auf diese Weise rekonstruierten Bildpunkte der Farbkanäle aller in den Bilddatensätzen repräsentierten unterschiedlichen Wellenlängenbereiche aus ein und demselben mehrfarbigen Pixeltupel ergibt folglich den vollständigen Bildpunkt des Farbbildes. Das gesamte Farbbild ergibt sich aus der Gesamtheit der erzeugten Bildpunkte.

Ein ähnliches Vorgehen ist beim Erzeugen der Bildpunkte eines photometrischen Stereobildes möglich. Hierbei wird nach dem sog. photometrischen Stereoverfahren vorgegangen, welches dem Fachmann aus dem Stand der Technik bekannt ist und deshalb nachfolgend nur ansatzweise erläutert wird. Der Helligkeitswert eines Einzelpixels jedes mehrdirektionalen Pixeltupels und die dazugehörige Beleuchtungsrichtung werden gemäß dem photometrischen Stereoverfahren in eine Gleichung eines Gleichungssystems für die Berechnung einer Oberflächennormalen an der Stelle des Objektbereichs, die das jeweilige Pixeltupel abbildet, eingesetzt.

Das Gleichungssystem gibt hierbei den qualitativen Zusammenhang wieder, dass eine Objektoberfläche, die einer Lichtquelle zugewandt ist, mehr Licht reflektiert und deshalb für einen Beobachter (hier: Bildsensoranordnung) heller erscheint, als eine Objektoberfläche, die von jener Lichtquelle abgewandt ist. Objektoberflächen, die seitlich zur Lichtquelle stehen, weisen entsprechend eine mittlere Helligkeit auf. Mit genügend Einzelpixeln im mehrdirektionalen Pixeltupel lassen sich ausreichend viele linear unabhängige Gleichungen des Gleichungssystems aufstellen, dessen Lösungsmenge die Oberflächennormale bestimmt. Im einfachen Fall kann man aus nur zwei Beleuchtungsrichtungen ein Differenzbild erzeugen, das viele topologischen Defekte in einer bestimmten Ausrichtung sichtbar macht. Durch das Berechnen weiterer Differenzbilder mit anderen Richtungskombination sind letzten endlich alle Defekte in allen Ausrichtungen detektierbar.

Über eine willkürlich festlegbare Farbkodierung kann der für das jeweilige mehrdirektionale Pixeltupel errechneten Orientierung der Oberflächennormale ein Farbwert oder ein Grauwert zugeordnet werden. Dieser Farbwert oder Grauwert entspricht dem Farbwert oder Grauwert des Bildpunktes im photometrischen Stereobild. Ein gesamtes photometrisches Stereobild ergibt sich aus allen auf diese Weise erzeugten Bildpunkten.

Die vorliegende Erfindung hat folglich den Vorteil, dass sowohl photometrische Stereobilder als auch das Farbbild anhand von aufgenommenen monochromatischen Helligkeitswerten berechnet werden können. Dies führt dazu, dass kein Farbsensor bzw. keine Farbkamera benötigt wird. Entsprechend gering ist der Kostenaufwand, wenn der Bilddatenprozessor für die Erzeugung photometrischer Stereobilder und des Farbbildes eingesetzt wird.

Ein Verfahren zum Erzeugen des photometrischen Stereobildes und des Farbbildes löst ebenfalls die eingangs zugrunde gelegt Aufgabe, wobei das Verfahren im angehängten Anspruch 6 definiert wird.

Dieses Verfahren bringt dieselben Vorteile wie die zuvor beschriebene erfindungsgemäße Vorrichtung.

Die Wellenlängenbereiche können kontinuierlich, unterbrochen und/oder aus einzelnen Spektrallinien gebildet sein. Die Beleuchtungsrichtungen beschreiben hierbei die räumlichen Richtungen, in welchen sich die jeweiligen Beleuchtungspulse zum Beleuchtungsbereich hin ausbreiten.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen. Die in Bezug auf den Bilddatenprozessor und die Vorrichtung beschriebenen Vorteile gelten ebenso für die erfindungsgemäßen Verfahren und umgekehrt.

Nach einer ersten möglichen Ausgestaltungsform kann der Bilddatenprozessor ausgestaltet sein, die Bilddatensätze direkt aus der Bildsensoranordnung auszulesen, nachdem diese dort aufgenommen wurden. Zusätzlich oder alternativ kann der Bilddatenprozessor ausgestaltet sein, die Bilddatensätze aus dem Speichermedium auszulesen. Entsprechend können die Bilddatensätze auf dem Speichermedium ab- oder zwischengespeichert sein. Bei Bedarf lässt sich somit vorteilhafterweise eine zeitliche Entkopplung zwischen der Aufnahme der Bilddatensätze und der Berechnung der Bilder erreichen.

Gemäß einer möglichen Ausgestaltungsform der erfindungsgemäßen Vorrichtung und/oder des erfindungsgemäßen Verfahrens kann die Beleuchtungssequenz auch mehr als vier Beleuchtungspulse aufweisen. Insbesondere können mindestens zwei Beleuchtungspulse unterschiedlicher Beleuchtungsrichtungen den gleichen Wellenlängenbereich aufweisen. Somit wird das angewandte photometrische Stereoverfahren weniger gegen eine Verfälschung durch Absorption der Beleuchtungspulse anfällig. Mit anderen Worten kann durch die Nutzung des gleichen Wellenlängenbereichs sichergestellt werden, dass die gemessenen Helligkeitswerte rein auf der Ausrichtung der Objektoberfläche beruhen und nicht durch die Farbe der Objektoberfläche beeinflusst sind.

Zusätzlich oder alternativ können mindestens zwei Beleuchtungspulse unterschiedlicher Wellenlängenbereiche die gleiche Beleuchtungsrichtung aufweisen.

Nach einer weiteren möglichen Ausgestaltungsform können die Wellenlängenbereiche der Beleuchtungspulse einen RGB-Farbraum abdecken. Mit anderen Worten kann jeder der Wellenlängenbereiche einen Anteil des RGB-Farbraums darstellen bzw. bilden. Bei den Wellenlängenbereichen kann es sich somit um die Wellenlängenbereiche von Rotlicht, Grünlicht und Blaulicht handeln. Diese Ausgestaltungsform eignet sich vorteilhafterweise für die Erzeugung von RGB-Farbbildern.

Zusätzlich oder alternativ können die Wellenlängenbereiche auch UV-Strahlung und/oder IR-Strahlung entsprechen. Bei dem zu berechnenden Farbbild kann es sich dann um ein Mehrspektralbild in Falschfarbendarstellung, insbesondere um ein Multispektralbild oder ein Hyperspektralbild handeln.

Optional kann mindestens ein Beleuchtungspuls, vorzugsweise jeder Beleuchtungspuls ein Lichtblatt bzw. eine Lichtscheibe bilden. Mit anderen Worten können die Beleuchtungspulse als auf den Beleuchtungsbereich gerichtete Lichtblätter bzw. Lichtscheiben ausgestaltet sein. Somit können die Beleuchtungspulse möglichst homogen über den Beleuchtungsbereich verteilt werden.

Erfindungsgemäß weist die Vorrichtung eine monochromatische Bildsensoranordnung mit einem Aufnahmebereich auf, wobei sich der Aufnahmebereich der Bildsensoranordnung und der Beleuchtungsbereich überlagern, und wobei die Bildsensoranordnung ausgestaltet ist, während jedes Beleuchtungspulses Helligkeitswerte im Aufnahmebereich zu messen. Durch die Nutzung einer monochromatischen Bildsensoranordnung zeichnet sich diese Ausgestaltungsform vorteilhafterweise durch besonders niedrige Anschaffungskosten aus.

Erfindungsgemäß umfasst der Verfahrensschritt des Ausleuchtens die Schritte Ausstrahlen eines Beleuchtungspulses in einem ersten Wellenlängenbereich aus einer ersten Beleuchtungsrichtung, aus einer zweiten Beleuchtungsrichtung, aus einer dritten Beleuchtungsrichtung und aus einer vierten Beleuchtungsrichtung, Ausstrahlen eines Beleuchtungspulses in einem zweiten Wellenbereich aus jeder der ersten, zweiten, dritten und vierten Beleuchtungsrichtung und Ausstrahlen eines Beleuchtungspulses in einem dritten Wellenlängenbereich aus jeder der ersten, zweiten, dritten und vierten Beleuchtungsrichtung, wobei der erste, zweite und dritte Wellenlängenbereich untereinander nicht deckungsgleich sind, und wobei die erste, zweite, dritte und vierte Beleuchtungsrichtung untereinander nicht parallel sind. Vorzugsweise wiederholen sich diese Schritte periodisch.

Die Nutzung von vier unterschiedlichen Beleuchtungsrichtungen verbessert die Genauigkeit des photometrischen Stereoverfahrens für die meisten Anwendungen hinreichend, ohne dabei den Rechenaufwand unverhältnismäßig ansteigen zu lassen.

Selbstverständlich können bei Anwendungen, die noch genauere photometrische Stereobilder benötigen, die Beleuchtungspulse aus mehr als vier unterschiedlichen Beleuchtungsrichtungen ausgestrahlt werden.

Gemäß einer weiteren möglichen Ausgestaltungsform können die Beleuchtungspulse einzeln aufeinanderfolgend ausgestrahlt werden und jeweils eine einseitig gerichtete Beleuchtungskonstellation erzeugen. Optional können durch gleichzeitiges Ausstrahlen mehrerer Beleuchtungspulse mit gleichem Wellenlängenbereich und unterschiedlichen Beleuchtungsrichtungen eine zweiseitig gerichtete Beleuchtungskonstellation oder eine mehrseitig diffuse Beleuchtungskonstellation resultieren. Dies wird nachfolgend erläutert.

So können beispielsweise mindestens zwei Beleuchtungspulse im gleichen Wellenlängenbereich zeitgleich ausgestrahlt werden und die zweiseitig gerichtete Beleuchtungskonstellation erzeugen. Vektoren, welche die Beleuchtungsrichtungen dieser beiden Beleuchtungspulse darstellen, weisen hierbei vorzugsweise zwei gleichgerichtete Raumkomponenten und eine entgegen gerichtete Raumkomponente auf. Mindestens zwei weitere Beleuchtungspulse in diesem gleichen Wellenlängenbereich können ebenfalls zeitgleich ausgestrahlt werden und noch eine weitere zweiseitig gerichtete Beleuchtungskonstellation erzeugen.

Die zuvor erwähnte mehrseitig diffuse Beleuchtungskonstellation kommt beispielsweise zustande, wenn vier Beleuchtungspulse im gleichen Wellenlängenbereich zeitgleich ausgestrahlt werden. Vektoren, welche die Beleuchtungsrichtungen dieser vier Beleuchtungspulse darstellen, weisen bei zwei der vier Beleuchtungspulse nur eine gleichgerichtete Raumkomponente und zwei entgegen gerichtete Raumkomponenten auf. Optional können vier weitere Beleuchtungspulse im gleichen Wellenbereich ebenfalls zeitgleich und die restlichen Beleuchtungspulse nacheinander ausgestrahlt werden. Die mehrseitig diffuse Beleuchtungskonstellation für letzteres lässt sich im Nachhinein rechnerisch rekonstruieren, indem die während der nacheinander ausgestrahlten Beleuchtungspulse gemessenen Helligkeitswerte gemittelt werden.

Die mehrseitig diffuse Beleuchtungskonstellation liefert gleichmäßige Beleuchtungsverhältnisse für die Aufnahme der Helligkeitswerte für das Farbbild. Die einseitig oder zweiseitig gerichteten Beleuchtungskonstellationen dienen hauptsächlich der Aufnahme der Helligkeitswerte für ein photometrisches Stereobild. Je nachdem, wie viele unterschiedliche einseitig oder zweiseitig gerichtete Beleuchtungskonstellationen vorliegen, kann ein Neigungsbild, ein Texturbild, ein Krümmungsbild, ein Gradientenbild und/oder ein Höhenbild als photometrisches Stereobild berechnet werden. Die Neigungsbilder, Texturbilder, Krümmungsbilder, Gradientenbilder und Höhenbilder können auch durch numerische Integration bzw. Differentiation ineinander umgerechnet werden.

Die erfindungsgemäße Vorrichtung kann den bereits erwähnten Bilddatenprozessor aufweisen und somit vorteilhafterweise ihre Funktion ohne weitere Zusatzgeräte erfüllen. Zusätzlich oder alternativ kann die Vorrichtung auch an den bereits oben erwähnten Computer anschließbar ausgestaltet sein.

Der Bilddatenprozessor kann ausgestaltet sein, nach jedem Beleuchtungspuls die Helligkeitswerte aus der Bildsensoranordnung als Bilddatensätze auszulesen und dabei jedem Helligkeitswert den Wellenlängenbereich und die Beleuchtungsrichtung dieses Beleuchtungspulses zuzuordnen.

Erfindungsgemäß weist die Bildsensoranordnung wenigstens vier in einem vorbestimmten räumlichen Abstand voneinander beabstandete Pixelfelder auf, wobei der zeitliche Abstand zwischen zwei aufeinanderfolgenden Beleuchtungspulsen der Beleuchtungssequenz gleich der Zeit ist, während der sich eine auf die Bildsensoranordnung projizierte Abbildung des Objekts durch die Relativgeschwindigkeit um eine Strecke vorschiebt, welche dem räumlichen Abstand zweier benachbarter Pixelfelder entspricht.

Auf diese Weise kann eine Pixelsynchronizität zwischen den von den Pixelfeldern aufgenommenen Helligkeitswerten erzeugt werden. Vorzugsweise bewegt sich hierfür das Objekt geradlinig und die Pixelfelder sind bezüglich der Bewegungsrichtung des Objekts genau hintereinander angeordnet. D.h. jede Stelle des Objekts, die vom ersten Pixelfeld abgelichtet wird, wird auch von allen dahinterliegend angeordneten Pixelfeldern abgelichtet.

Der zeitliche Abstand entspricht einer Zeitspanne und/oder einer Zeitdauer, die sich aus dem Pixelabstand auf dem Objekt und der Relativgeschwindigkeit des bewegten Objekts zur Bildsensoranordnung berechnet.

Mit anderen Worten, die Beleuchtungsanordnung ist so ausgebildet, dass der zeitliche Abstand zwischen zwei aufeinanderfolgenden Beleuchtungspulsen der Beleuchtungssequenz so gewählt ist, dass ein bestimmter Objektbereich sequentiell auf die wenigstens vier Pixelfelder abgebildet wird. Somit wird vorteilhaft die Pixelsynchronizität gewährleistet, wobei die erzeugten Messwerte vergleichbar werden.

Bei den Pixelfeldern der Bildsensoranordnung kann es sich beispielsweise um Pixelzeilen handeln. Entsprechend stellt der räumliche Abstand einen Zeilenabstand zwischen den Pixelzeilen dar. Optional kann die Bildsensoranordnung für jede aus der Beleuchtungssequenz resultierende unterschiedliche Beleuchtungskonstellation wenigstens eine Pixelzeile aufweisen. Dadurch wird sichergestellt, dass für jedes mehrfarbige Pixeltupel auch ein mehrdirektionales Pixeltupel aufgenommen werden kann, das dieselbe Stelle des Objekts abbildet. Hierfür kann die Bildsensoranordnung beispielsweise als eine mehrzeilige Zeilenkamera oder eine zeilenweise auslesbare Matrixkamera ausgestaltet sein. Wahlweise kann auch eine Kombination aus mehreren derartigen Kameras die Bildsensoranordnung bilden.

Gemäß einer alternativen Ausgestaltungsform kann die Anzahl der Pixelzeilen der Bildsensoranordnung auch kleiner als die Anzahl der aus der Beleuchtungssequenz resultierenden unterschiedlichen Beleuchtungskonstellationen sein. Somit fehlen zwar Pixelzeilen, um jeden Objektbereich des bewegten Objekts in jeder der unterschiedlichen Beleuchtungskonstellationen abzulichten, die bereits oben definierte Pixelsynchronizität kann dennoch hinreichend genau erzielt werden. Für jede "fehlende" Pixelzeile müssen die Helligkeitswerte für je eine Beleuchtungskonstellation "zwischen" den vorhandenen Pixelzeilen aufgenommen werden. Mit anderen Worten muss der zeitliche Abstand zum Beleuchtungspuls der vorherigen Beleuchtungskonstellation kleiner sein als die Zeit, während der sich die auf die Bildsensoranordnung projizierte Abbildung des Objekts durch die Relativgeschwindigkeit um die Strecke vorschiebt, welche dem Zeilenabstand zweier benachbarter Pixelzeilen entspricht.

Zum Beispiel kann in einem Anwendungsfall die Bildsensoranordnung nur zwei Pixelzeilen aufweisen während die Beleuchtungsanordnung eine Beleuchtungssequenz mit vier unterschiedlichen Beleuchtungskonstellationen ausstrahlt. In einem anderen Anwendungsfall kann die Bildsensoranordnung vier Pixelzeilen aufweisen während die Beleuchtungsanordnung eine Beleuchtungssequenz mit sechs unterschiedlichen Beleuchtungskonstellationen ausstrahlt. Die Anzahl der Pixelzeilen und Beleuchtungssequenzen ist prinzipiell variabel, wobei in jedem Fall die Anzahl der Pixelzeilen kleiner als die Anzahl der Beleuchtungssequenzen ist.

Grundsätzlich sind in diesen Fällen jedoch nicht genügend Pixelzeilen vorhanden, um jeden Objektbereich des bewegten Objekts in jeder der unterschiedlichen Beleuchtungskonstellationen abzulichten. Um dennoch die bereits oben erwähnte Pixelsynchronizität zumindest teilweise zu erzielen, muss der zeitliche Abstand zwischen zwei aufeinanderfolgenden Beleuchtungspulsen mindestens bei zwei Beleuchtungskonstellationen kleiner sein, als die Zeit, während der sich die auf die Bildsensoranordnung projizierte Abbildung des Objekts durch die Relativgeschwindigkeit um die Strecke vorschiebt, welche dem räumlichen Abstand zweier benachbarter Pixelzeilen entspricht. Die Helligkeitswerte für diese Beleuchtungskonstellationen müssen folglich "zwischen" den Pixelzeilen aufgenommen werden. Der Versatz zwischen den beiden verkürzt aufgenommenen Pixelzeilen beträgt hierbei zum Beispiel 50%, wahlweise weniger als 25%, vorzugsweise weniger als 10% der Pixelbreite eines Einzelpixels der Bildsensoranordnung. Eine derartige Genauigkeit ist für die meisten Anwendungen hinreichend und wird im Rahmen der vorliegenden Erfindung noch als Pixelsynchronizität aufgefasst. Reicht diese etwas ungenaue Pixelsynchronizität nicht aus, können die Helligkeitswerte durch eine Interpolation oder Mittelwertbildung zweier Pixelzeilen zusätzlich approximiert werden.

Auch bei nicht unmittelbar benachbarten Pixelzeilen kann die oben erwähnte Pixelsynchronizität hinreichend erzielt werden, wenn die "zwischengeschobenen" Beleuchtungskonstellationen in möglichst kurzem zeitlichen Abstand zur jeweils vorherigen Beleuchtungskonstellation erzeugt werden und die Messung der Helligkeitswerte unverzüglich erfolgt. Das heißt in diesem Fall viele "zwischengeschobene" Beleuchtungskonstellationen erzeugt werden während sich die auf die Bildsensoranordnung projizierte Abbildung des Objekts durch die Relativgeschwindigkeit um die Strecke vorschiebt, welche dem Zeilenabstand zweier benachbarter Pixelzeilen entspricht.

Die weiter oben erwähnte geradlinige Bewegung des Objekts kann beispielsweise durch ein Fördergerät erzeugt werden. Entsprechend kann die erfindungsgemäße Vorrichtung das Fördergerät aufweisen. Das erfindungsgemäße Verfahren umfasst die Schritte (gegebenenfalls Ansteuern des Fördergeräts) Bewegen des Objekts durch den Beleuchtungsbereich und durch den Aufnahmebereich der monochromatischen Bildsensoranordnung und Aufnehmen der Helligkeitswerte im Aufnahmebereich während jedes Beleuchtungspulses. Mit dieser Ausgestaltungsform sind Endlosaufnahmen möglich, sodass sie sich insbesondere für Anwendungen mit länglichen oder kontinuierlichen Objekten eignet.

Die Relativgeschwindigkeit und Sensorgeometrie sind vorzugsweise konstant. Je nach Anwendung können sich die Geschwindigkeitswerte und/oder die Sensordaten zeitlich ändern. In beiden Fällen kann der Bilddatenprozessor ausgestaltet sein, die Geschwindigkeitswerte und die Sensordaten z.B. über eine oder je eine Schnittstelle auszulesen oder zu empfangen.

Ferner ist im erfindungsgemäßen Verfahren vorgesehen, dass eine monochromatische Bildsensoranordnung mit wenigstens vier in einem vorbestimmten räumlichen Abstand voneinander beabstandeten Pixelfeldern bereitgestellt wird, wobei der zeitliche Abstand zwischen zwei aufeinanderfolgenden Beleuchtungspulsen der Beleuchtungssequenz kleiner gleich der Zeit gewählt wird, während der sich eine auf die Bildsensoranordnung projizierte Abbildung des Objekts durch die Relativgeschwindigkeit um eine Strecke vorschiebt, welche dem räumlichen Abstand zweier benachbarter Pixelfelder entspricht. Im Folgenden ist die Erfindung beispielhaft mit Bezug auf die Zeichnungen näher erläutert. Die bei den gezeigten Ausführungsformen beispielhaft dargestellte Merkmalskombination kann nach Maßgabe der obigen Ausführungen entsprechend den für einen bestimmten Anwendungsfall notwendigen Eigenschaften des Bilddatenprozessors und/oder der erfindungsgemäßen Vorrichtung durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:
- Fig. 1:: eine schematische Darstellung eines Bilddatenprozessors gemäß einer beispielhaften Ausführungsform;
- Fig. 2:: eine schematische Darstellung einer erfindungsgemäßen Vorrichtung gemäß einer beispielhaften Ausführungsform; und
- Fig. 3:: eine schematische Darstellung einer erfindungsgemäßen Vorrichtung gemäß einer weiteren beispielhaften Ausführungsform.

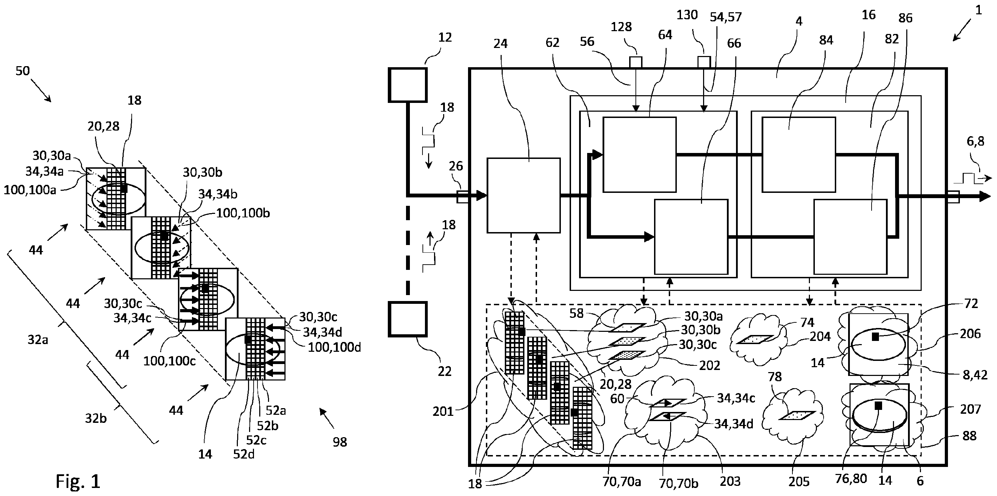

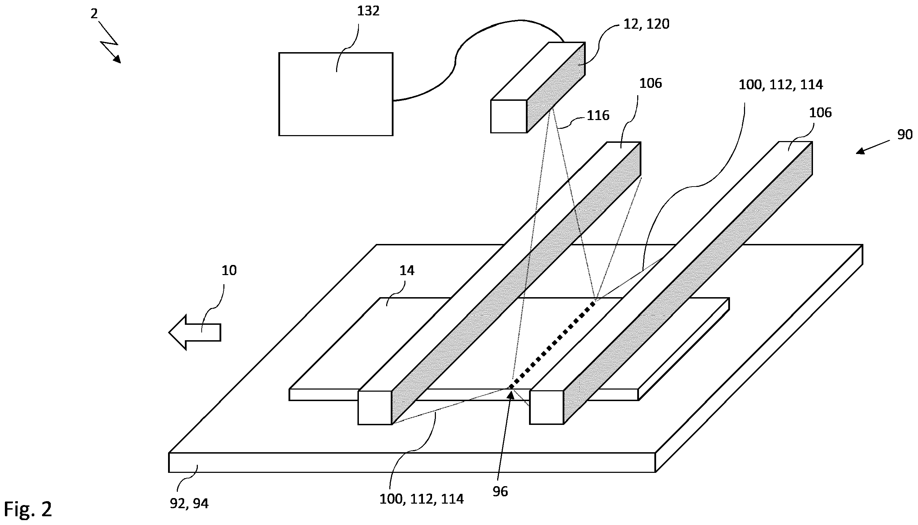

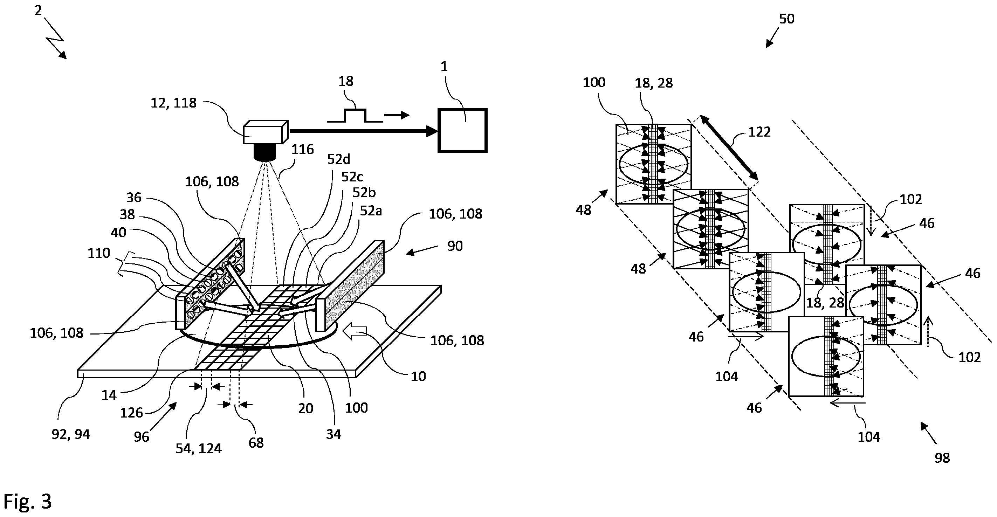

Im Folgenden ist ein Bilddatenprozessor 1 mit Bezug auf Fig. 1 beschrieben. Ferner sind beispielhafte Ausführungsformen einer erfindungsgemäßen Vorrichtung 2 anhand von Fig. 2 und 3 beschrieben. Obwohl einige Aspekte der Erfindung lediglich im Rahmen einer Vorrichtung beschrieben werden, ist es selbstverständlich möglich, dass diese Aspekte auch eine Beschreibung des entsprechenden Verfahrens darstellen, wobei z.B. ein Block, ein Modul, eine Einheit oder eine Vorrichtung einem Verfahrensschritt oder einer Funktion eines Verfahrensschritts entsprechen. Analog dazu stellen Aspekte, die im Rahmen eines Verfahrensschritts beschrieben werden, auch entsprechend eine Beschreibung eines Blocks, eines Moduls, einer Einheit oder einer Eigenschaft der Vorrichtung dar.

In Fig. 1 ist eine stark vereinfachte, schematische Darstellung einer beispielhaften Ausführungsform des Bilddatenprozessors 1 gezeigt. Der Bilddatenprozessor 1 kann eine eigenständige Prozessorplatine 4 aufweisen und/oder auf einer Platine (nicht gezeigt) der Vorrichtung 2 (siehe Fig. 2 und 3) integriert sein. Die nachfolgend beschriebenen Blöcke, Module und Einheiten des Bilddatenprozessors 1 können jeweils in Hardware, Software oder in einer Kombination aus beidem implementiert sein.

Der Bilddatenprozessor 1 ist für die Berechnung photometrischer Stereobilder 6 sowie eines Farbbildes 8 von einem mit einer vorbestimmten Relativgeschwindigkeit 10 relativ zu einer monochromatischen Bildsensoranordnung 12 (siehe Fig. 2 und 3) mit vorbestimmter Sensorgeometrie bewegten Objekt 14 vorgesehen. Hierfür ist der Bilddatenprozessor 1 ausgestaltet, in einer Bildberechnungseinheit 16 die photometrischen Stereobilder 6 und das Farbbild 8 aus wenigstens vier Bilddatensätzen 18 zu berechnen. Dies wird nachfolgend noch näher erläutert.

In Fig. 1 ist links für die Bilddatensätze 18 angedeutet, dass diese beispielsweise direkt aus monochromatischen Pixeln 20 der Bildsensoranordnung 12 ausgelesen werden können, nachdem sie dort aufeinanderfolgend aufgenommen wurden, wie weiter unten noch erläutert wird. Alternativ können die Bilddatensätze 18 auch auf einem Speichermedium 22 gespeichert sein und aus diesem ausgelesen werden. Für das Auslesen (siehe Gedankenblase 201 in Fig. 1) kann der Bilddatenprozessor 1 eine entsprechende Ausleseeinheit 24 und eine Ausleseschnittstelle 26 aufweisen.

Die Bilddatensätze 18 enthalten erfindungsgemäß monochromatische Grauwerte, die Helligkeitswerte 28 unterschiedlicher Stellen eines Bereichs des Objekts 14 darstellen. Mindestens drei der Bilddatensätze 18 repräsentieren dabei Helligkeitswerte 28 des in jeweils unterschiedlichen Wellenlängenbereichen 30 beleuchteten Objekts 14. Derartige Bilddatensätze 18 sind in Fig. 1 beispielhaft als Bilddatensatzgruppe 32a gekennzeichnet. Mindestens zwei der Bilddatensätze 18 repräsentieren Helligkeitswerte 28 des aus jeweils unterschiedlichen Beleuchtungsrichtungen 34 beleuchteten Objekts 14. Derartige Bilddatensätze 18 sind in Fig. 1 beispielhaft als Bilddatensatzgruppe 32b gekennzeichnet.

Mit anderen Worten enthält jeder Bilddatensatz 18 unter Beleuchtung in einem vorbestimmten Wellenlängenbereich 30 aus einer vorbestimmten Beleuchtungsrichtung 34 von der Bildsensoranordnung 12 an unterschiedlichen Stellen des Objekts 14 gemessene Helligkeitswerte 28, wobei sich mindestens drei der Bilddatensätze 18 durch die darin repräsentierten Wellenlängenbereiche 30 unterscheiden (d.h. Bilddatensatzgruppe 32a) und wobei sich mindestens zwei der Bilddatensätze 18 durch die darin repräsentierten Beleuchtungsrichtungen 34 unterscheiden (d.h. Bilddatensatzgruppe 32b). Wie zu erkennen ist, können jeweils dieselben Bilddatensätze 18 gleichzeitig zur Bilddatensatzgruppe 32a und 32b gehören.

Wie weiter unten noch erläutert wird, kann es sich bei den unterschiedlichen Wellenlängenbereichen 30 beispielsweise um die Wellenlängenbereiche von Rotlicht 36, Grünlicht 38 und Blaulicht 40 handeln. Entsprechend können die bei der Beleuchtung verwendeten Wellenlängenbereiche 30 einen RGB-Farbraum abdecken und das zu berechnende Farbbild 8 ein RGB-Farbbild 42 sein. Zusätzlich oder alternativ können bei der Beleuchtung auch UV-Strahlung und/oder IR-Strahlung zum Einsatz kommen. Bei dem zu berechnenden Farbbild 8 kann es sich dann entsprechend um ein Mehrspektralbild in Falschfarbendarstellung, insbesondere um ein Multispektralbild oder ein Hyperspektralbild handeln.

Wie ebenfalls weiter unten noch erläutert wird, können die unterschiedlichen Beleuchtungsrichtungen 34 aus einer einseitig gerichteten Beleuchtungskonstellation 44, einer zweiseitig gerichteten Beleuchtungskonstellation 46 oder einer mehrseitig diffusen Beleuchtungskonstellation 48 resultieren. Die einseitig oder zweiseitig gerichteten Beleuchtungskonstellationen 44, 46 dienen hierbei hauptsächlich der Aufnahme der Helligkeitswerte 28 für das photometrische Stereobild 6. Je nachdem, wie viele unterschiedliche einseitig oder zweiseitig gerichtete Beleuchtungskonstellationen 44, 46 vorliegen, kann ein Neigungsbild, ein Texturbild, ein Krümmungsbild, ein Gradientenbild und/oder ein Höhenbild als photometrisches Stereobild 6 berechnet werden. Die mehrseitig diffuse Beleuchtungskonstellation 48 liefert gleichmäßige Beleuchtungsverhältnisse für die Aufnahme der Helligkeitswerte 28 für das Farbbild 8.

Das genaue Zustandekommen der Beleuchtungskonstellationen 44, 46, 48 in den unterschiedlichen Wellenlängenbereichen 30 und aus den unterschiedlichen Beleuchtungsrichtungen 34 ist weiter unten im Zusammenhang mit der erfindungsgemäßen Vorrichtung 2 näher erläutert. Der Bilddatenprozessor 1, insbesondere die Ausleseeinheit 24, kann ausgestaltet sein, jedem Helligkeitswert 28 den dazugehörigen Wellenlängenbereich 30 und die dazugehörige Beleuchtungsrichtung 34 zuzuordnen.

Zur Verbesserung des Verständnisses sind bei der Darstellung der Bilddatensätze 18 in Fig. 1 die Helligkeitswerte 28 den einzelnen Pixeln 20 der Bildsensoranordnung 12, von denen sie aufgenommen wurden, zugeordnet und zusammen mit dem gesamten Objekt 14, den unterschiedlichen Wellenlängenbereichen 30 und den unterschiedlichen Beleuchtungsrichtungen 34 abgebildet. Hierbei handelt es sich jeweils um Draufsichten 50 auf das Objekt 14 aus der Perspektive des Bildsensoranordnung 12. Die jeweils vorliegende Beleuchtungskonstellation 44, 46, 48 ist in den Draufsichten 50 durch Pfeile angedeutet, wobei unterschiedliche Pfeilrichtungen unterschiedliche Beleuchtungsrichtungen 34 darstellen, während unterschiedliche Pfeillinien (z.B. Punkt-Strich, durchgezogener Strich, dicker Strich) die unterschiedlichen Wellenlängenbereiche 30 wiedergeben.

Die Helligkeitswerte 28 der Bilddatensätze 18 können von der Bildsensoranordnung 12 unter Verwendung eines elektronischen Verschlusses gemessen sein. Entsprechend ist erkennbar, dass die Bildsensoranordnung, mit welcher die Bilddatensätze 18 aufgenommen sind, vier Pixelzeilen 52a, 52b, 52c, 52d aufweist. Die oben bereits erwähnte Sensorgeometrie ist in diesem Fall hauptsächlich durch den gegenseitigen räumlichen Abstand 54 der Pixelzeilen 52a, 52b, 52c, 52d (d.h. Zeilenabstand 124) definiert.

Der Bilddatenprozessor 1 ist ferner ausgestaltet, anhand des räumlichen Abstands 54 und anhand von die Relativgeschwindigkeit 10 repräsentierenden Geschwindigkeitswerten 56 aus den Bilddatensätzen 18 mit unterschiedlichen Wellenlängenbereichen 30, insbesondere aus den jeweiligen Bilddatensatzgruppen 32a, Helligkeitswerte 28 von Einzelpixeln 20 derselben Stelle des Objektbereichs zu identifizieren und als ein mehrfarbiges Pixeltupel 58 zusammenzufassen (siehe Gedankenblase 202 in Fig. 1). Außerdem ist der Bilddatenprozessor 1 ausgestaltet, anhand des räumlichen Abstands 54 und der Geschwindigkeitswerte 56 aus den Bilddatensätzen 18 mit unterschiedlichen Beleuchtungsrichtungen 34, insbesondere aus den jeweiligen Bilddatensatzgruppen 32b, Helligkeitswerte von Einzelpixeln 20 derselben Stelle des Objektbereichs zu identifizieren und als ein mehrdirektionales Pixeltupel 60 zusammenzufassen (siehe Gedankenblase 203 in Fig. 1). Hierfür kann die Bildberechnungseinheit 16 ein Pixeltupelidentifizierungsmodul 62 mit einem Block 64 zum Identifizieren und Zusammenfassen mehrfarbiger Pixeltupel 58 und einem Block 66 zum Identifizieren und Zusammenfassen mehrdirektionaler Pixeltupel 60 aufweisen.

Jedes mehrfarbige Pixeltupel 58 ist ein Tupel der Länge *n* und enthält als Elemente die Helligkeitswerte 28 aus den Bilddatensätzen 18 mit unterschiedlichen Wellenlängenbereichen 30, die von Pixeln der Bildsensoranordnung 12 an ein und derselben Stelle des Objektbereichs gemessen wurden, wobei die Länge *n* der Anzahl der unterschiedlichen Wellenlängenbereiche 30 entspricht. Analog ist jedes mehrdirektionale Pixeltupel 60 ein Tupel der Länge *m* und enthält als Elemente die Helligkeitswerte 28 aus den Bilddatensätzen 18 mit unterschiedlichen Beleuchtungsrichtungen 34, die von Pixeln der Bildsensoranordnung 12 an ein und derselben Stelle des Objektbereichs gemessen wurden, wobei die Länge *m* der Anzahl der unterschiedlichen Beleuchtungsrichtungen 34 entspricht.

Vorzugsweise sind die Bilddatensätze 18 derart aufgenommen, dass für jedes mehrfarbige Pixeltupel 58 auch ein mehrdirektionales Pixeltupel 60, das dieselbe Stelle des Objektbereiches abbildet, vorhanden ist und umgekehrt. Dies wird weiter unten im Zusammenhang mit der erfindungsgemäßen Vorrichtung 2 noch näher erläutert und ermöglicht die Erzeugung einer Pixelsynchronizität zwischen den Farbkomponenten des Farbbilds 8 und dem photometrischen Stereobild 6.

Die Helligkeitswerte 28 jedes mehrfarbigen Pixeltupels 58 können beispielsweise durch ihre Anordnung innerhalb des Pixeltupels 58 einem Wellenlängenbereich 30 eindeutig zuordenbar sein. Entsprechend sind die Helligkeitswerte 28 jedes mehrdirektionalen Pixeltupels 60 durch ihre Anordnung innerhalb des Pixeltupels 60 eindeutig einer Beleuchtungsrichtung 34 zuordenbar. Dies ist in Fig. 1 rein beispielhaft für Pixeltupel 58, 60 mit drei/zwei Elementen 70 angedeutet (siehe Gedankenblasen 202, 203). Die mehrfarbigen Pixeltupel 58 und die mehrdirektionalen Pixeltupel 60 können sich selbstverständlich durch ihre Anzahl der Elemente 70 unterscheiden.

Der Bilddatenprozessor 1 ist ferner ausgestaltet, anhand jedes mehrfarbigen Pixeltupels 58 und der Wellenlängenbereiche 30, insbesondere der Wellenlängenbereiche 30 der mehrseitig diffusen Beleuchtungskonstellationen 48 einen Bildpunkt 72 des Farbbildes 8 zu erzeugen (siehe Gedankenblase 204 in Fig. 1). Da sämtliche Helligkeitswerte 28, wie oben bereits beschrieben, lediglich als monochromatische Grauwerte vorliegen, jedoch einem Wellenlängenbereich 30 zuordenbar sind, kann der Bildpunkt 72 des Farbbildes 8 wie folgt rekonstruiert werden. Der Helligkeitswert 28 eines Elements 70 des mehrfarbigen Pixeltupels 58 in Kombination mit dem dazugehörigen Wellenlängenbereich 30 entspricht dem Helligkeitswert 28 eines Bildpunktes 74 eines Farbkanals des Farbbildes 8, wobei der Farbkanal diesen Wellenlängenbereich 30 wiedergibt. Die Überlagerung der auf diese Weise rekonstruierten Bildpunkte 74 unterschiedlicher Wellenlängenbereiche 30 aus ein und demselben mehrfarbigen Pixeltupel 58 ergibt folglich den vollständigen Bildpunkt 72 des Farbbildes 8. Das gesamte Farbbild 8 ergibt sich aus der Gesamtheit der erzeugten Bildpunkte 72 (siehe Gedankenblase 206 in Fig. 1).

Außerdem ist der Bilddatenprozessor 1 ausgestaltet, anhand jedes mehrdirektionalen Pixeltupels 60 und der Beleuchtungsrichtungen 34, insbesondere der Beleuchtungsrichtungen 34 der gerichteten Beleuchtungskonstellationen 44, 46 einen Bildpunkt 76 des photometrischen Stereobildes 6 zu erzeugen (siehe Gedankenblase 205 in Fig. 1). Bei der Erzeugung des Bildpunktes 76 wird nach dem sog. photometrischen Stereoverfahren, welches dem Fachmann aus dem Stand der Technik bekannt ist und deshalb nachfolgend nur ansatzweise erläutert wird, vorgegangen. Der Helligkeitswert 28 jedes Elements 70 des mehrdirektionalen Pixeltupels 60 und die dazugehörige Beleuchtungsrichtung 34 werden gemäß dem photometrischen Stereoverfahren in eine Gleichung eines Gleichungssystems für die Berechnung einer Oberflächennormalen an der Stelle des Objektbereichs, die das Pixeltupel 60 abbildet, eingesetzt.

Das Gleichungssystem gibt hierbei den qualitativen Zusammenhang wieder, dass eine Objektoberfläche, die einer gerichteten Lichtquelle zugewandt ist, mehr Licht reflektiert und deshalb für einen Beobachter (hier: Bildsensoranordnung 12) heller erscheint, als eine Objektoberfläche, die von dieser Lichtquelle abgewandt ist. Objektoberflächen, die seitlich zur Lichtquelle stehen, weisen eine mittlere Helligkeit auf. Mit genügend Elementen 70 im Pixeltupel 60 lassen sich ausreichend viele linear unabhängige Gleichungen des Gleichungssystems aufstellen, dessen Lösungsmenge die Oberflächennormale bestimmt.

Über eine willkürlich festlegbare Farbkodierung kann der für das Pixeltupel 60 errechneten Orientierung der Oberflächennormale ein Farbwert oder ein Grauwert 78 zugeordnet werden. Dieser Farbwert oder Grauwert 78 entspricht dann dem Farbwert oder Grauwert 80 des Bildpunktes 76. Das gesamte photometrische Stereobild 6 ergibt sich aus der Gesamtheit der auf diese Weise erzeugten Bildpunkte 76 (siehe Gedankenblase 207 in Fig. 1).

Zwecks Erzeugung der Bildpunkte 72,76 kann die Bildberechnungseinheit 16 ein Bildpunkterzeugungsmodul 82 mit einem Block 84 zum Erzeugen der Bildpunkte 72 des Farbbildes 8 und einem Block 86 zum Erzeugen der Bildpunkte 76 des photometrischen Stereobildes 6 aufweisen. Aufgrund der bereits erwähnten Pixelsynchronizität können das Farbbild 8 und das photometrische Stereobild 6 in der Bildberechnungseinheit 16 optional zu einem photometrischen Stereo-Farbbild kombiniert werden.

Wahlweise kann der Bilddatenprozessor 1 einen internen Datenspeicher 88 aufweisen, welcher ausgestaltet ist, Zwischenergebnisse der im Bilddatenprozessor 1 ablaufenden Verfahrensschritte ab- oder zwischen zu speichern. Die Gedankenblasen 201, 202, 203, 204, 205, 206 und 207 aus Fig. 1 sollen lediglich eine Versinnbildlichung der im Bilddatenprozessor 1 ablaufenden Verfahrensschritte darstellen. Ihre Platzierung im Bereich des Datenspeichers 88 ist Platzgründen geschuldet und soll nicht bedeuten, dass eine derartige grafische Wiedergabe im Bilddatenprozessor 1 oder im Datenspeicher 88 stattfinden muss.

Fig. 2 und 3 zeigen schematische Darstellungen von beispielhaften Ausführungsformen der erfindungsgemäßen Vorrichtung 2, welche die bereits weiter oben erwähnte Bildsensoranordnung 12 und eine Beleuchtungsanordnung 90 aufweist. Der Aufbau und die Funktion der Beleuchtungsanordnung 90 werden nachfolgend mit Bezug auf Fig. 2 erläutert, in der die Bildsensoranordnung 12 nur stark vereinfacht dargestellt ist. Die Bildsensoranordnung 12 wird wiederum mit Bezug auf Fig. 3 beschrieben, in der aus Gründen der besseren Übersicht die Beleuchtungsanordnung 90 nur stark vereinfacht dargestellt ist.

Die Vorrichtung 2 dient zum Erzeugen des photometrischen Stereobildes 6 und des Farbbildes 8. Insbesondere dient die Beleuchtungsanordnung 90 der Vorrichtung 2 zum Erzeugen der Beleuchtungskonstellationen 44, 46, 48 und die Bildsensoranordnung 12 der Vorrichtung 2 zum Aufnehmen der Helligkeitswerte 28 für die Bilddatensätze 18. Um die Relativgeschwindigkeit 10 zu erzeugen, kann die Vorrichtung 2 ferner ein Fördergerät 92, beispielsweise ein Förderband 94, auf dem das Objekt 14 relativ zur Vorrichtung 2, insbesondere relativ zur Bildsensoranordnung 12 bewegbar ist, aufweisen. Zusätzlich oder alternativ kann auch die Vorrichtung 2, insbesondere die Bildsensoranordnung 12, relativ zum Objekt 14 bewegbar ausgestaltet sein.

Die Beleuchtungsanordnung 90 ist auf einen Beleuchtungsbereich 96 ausgerichtet und ausgestaltet, eine Beleuchtungssequenz 98 in den Beleuchtungsbereich 96 zyklisch auszustrahlen. Die Beleuchtungssequenz 98 weist wenigstens vier Beleuchtungspulse 100 auf, die sich vorzugsweise periodisch wiederholen, wobei jeder Beleuchtungspuls 100 einen Wellenlängenbereich 30 und eine Beleuchtungsrichtung 34 aufweist. Der Wellenlängenbereich 30 kann hierbei kontinuierlich, unterbrochen oder aus einzelnen Spektrallinien gebildet sein. Die Beleuchtungsrichtung 34 ist hierbei die räumliche Richtung, in welcher sich der jeweilige Beleuchtungspuls 100 zum Beleuchtungsbereich 96 hin ausbreitet.

Mindestens drei der Beleuchtungspulse 100 unterscheiden sich durch ihre jeweiligen Wellenlängenbereiche 30 und mindestens zwei der Beleuchtungspulse 100 unterscheiden sich durch ihre jeweiligen Beleuchtungsrichtungen 34, was sich in den oben bereits erwähnten Bilddatensatzgruppen 32a, 32b wiederspiegelt.

Die Beleuchtungspulse 100 können einzeln von der Beleuchtungsanordnung 90 ausgestrahlt werden und jeweils eine einseitig gerichtete Beleuchtungskonstellation 44 erzeugen. Optional können durch gleichzeitiges Ausstrahlen mehrerer Beleuchtungspulse 100 mit gleichem Wellenlängenbereich 30 und unterschiedlicher Beleuchtungsrichtung 34 eine zweiseitig gerichtete Beleuchtungskonstellation 46 (siehe Fig. 3) oder eine mehrseitig diffuse Beleuchtungskonstellation 48 resultieren. Dies wird nachfolgend erläutert.

Die Beleuchtungsanordnung 90 kann z. B. ausgestaltet sein, einen ersten Beleuchtungspuls 100a in einem ersten Wellenlängenbereich 30a aus einer ersten Beleuchtungsrichtung 34a, einen zweiten Beleuchtungspuls 100b in einem zweiten Wellenlängenbereich 30b aus einer zweiten Beleuchtungsrichtung 34b und einen dritten Beleuchtungspuls 100c in einem dritten Wellenlängenbereich 30c aus einer dritten Beleuchtungsrichtung 34c auszustrahlen, wobei die Wellenlängenbereiche 30a, 30b, 30c untereinander nicht deckungsgleich sind, und wobei die Beleuchtungsrichtungen 34a, 34b, 34c untereinander nicht parallel sind. Sämtliche Beleuchtungsrichtungen können sich jedoch im Beleuchtungsbereich 96 schneiden.

Wie in den Draufsichten 50 der Fig. 1 links oben dargestellt ist, wird jeder Beleuchtungspuls 100a, 100b, 100c einzeln ausgestrahlt und erzeugt jeweils genau eine einseitig gerichtete Beleuchtungskonstellation 44. Die Beleuchtungspulse 100a, 100b, 100c können sich periodisch wiederholen.

Die Beleuchtungsanordnung 90 kann ferner ausgestaltet sein, einen vierten Beleuchtungspuls 100d im dritten Wellenlängenbereich 30c aus der Beleuchtungsrichtung 34d auszustrahlen, wobei die Beleuchtungsrichtungen 34c, 34d untereinander nicht parallel sind.

Mit anderen Worten kann die Beleuchtungsanordnung 90 ausgestaltet sein, genau einen Beleuchtungspuls im ersten Wellenlängenbereich aus jeder der ersten, zweiten, dritten und vierten Beleuchtungsrichtung, genau einen Beleuchtungspuls im zweiten Wellenbereich aus jeder der ersten, zweiten, dritten und vierten Beleuchtungsrichtung und genau einen Beleuchtungspuls im dritten Wellenlängenbereich aus jeder der ersten, zweiten, dritten und vierten Beleuchtungsrichtung auszustrahlen. Dies ist nicht extra dargestellt. In dem Fall müssten auch entsprechend mehr Pixelzeilen zur Verfügung gestellt werden. Nämlich genau die Anzahl der Wellenlängen mal der Anzahl der Richtungen.

Es können auch zwei Beleuchtungspulse 100 im gleichen Wellenlängenbereich 30 zeitgleich ausgestrahlt werden, um eine zweiseitig gerichtete Beleuchtungskonstellation 46 zu erzeugen. Die Beleuchtungsrichtungen der zwei zeitgleich ausgestrahlten Beleuchtungspulse weisen hierbei vorzugsweise eine gleichgerichtete Horizontalkomponente 102 und eine entgegen gerichtete Horizontalkomponente 104 auf. Vorzugsweise werden danach die restlichen Beleuchtungspulse im gleichen Wellenlängenbereich 30 ebenfalls zeitgleich ausgestrahlt. Dies ist in den Draufsichten 50 der Fig. 3 dargestellt.

Wie in Fig. 3 gezeigt ist, kann die Beleuchtungsanordnung 90 wenigstens drei auf den Beleuchtungsbereich 96 ausgerichtete elektromagnetische Strahler 106 aufweisen, von denen jeder ausgestaltet ist, genau einen der Beleuchtungspulse 100 in genau einem Wellenlängenbereich 30 und genau einer Beleuchtungsrichtung 34 auszustrahlen, sodass die in den Draufsichten 50 der Fig. 1 links oben dargestellte Beleuchtungssequenz 98 entsteht. Insbesondere sind bei der in Fig. 3 gezeigten Beleuchtungsanordnung 90 die elektromagnetischen Strahler 106 mit Rotlicht 36, mit Grünlicht 38 und mit Blaulicht 40 ausgestaltet, wobei das Rotlicht 36, das Grünlicht 38 und das Blaulicht 40 alternierend vorhanden sind und pro elektronischen Strahler 106 aus unterschiedlichen räumlichen Richtungen auf den Beleuchtungsbereich 96 strahlen.

Wie in Fig. 2 gezeigt ist, sind die elektromagnetischen Strahler 106 möglichst so ausgestaltet, dass sie die Beleuchtungspulse 100 homogen über den Beleuchtungsbereich 96 verteilen. Hierfür kann jeder elektromagnetische Strahler 106 ein auf den Beleuchtungsbereich gerichtete Optik (nicht gezeigt) aufweisen.

Vorzugsweise weist die Beleuchtungsanordnung 90 für jeden unterschiedlichen Wellenlängenbereich 30 der Beleuchtungspulse 100 und/oder für jede unterschiedliche Beleuchtungsrichtung 34 der Beleuchtungspulse 100 mindestens einen kombinierten elektromagnetischen Strahler 106 auf. So kann die Beleuchtungsanordnung 90, wie beispielhaft in Fig. 3 gezeigt, vier als Lichtleisten 108 ausgestaltete elektromagnetische Strahler 106 aufweisen. In jeder Lichtleiste 108 können LEDs 110 jedes der unterschiedlichen Wellenlängenbereiche 30 abwechselnd angeordnet sein (z.B. in der Reihenfolge: R-G-B-...-R-G-B). LEDs desselben Wellenlängenbereichs 30 sind hierbei unabhängig von den LEDs der anderen Wellenlängenbereiche 30 ansteuerbar. Ferner können die Lichtleisten 108 ausgestaltet sein, in vier unterschiedlichen räumlichen Ausrichtungen auf den Beleuchtungsbereich 96 zu strahlen. Dadurch ist es möglich, die in den Draufsichten 50 dargestellten Beleuchtungssequenzen 98 zu erzeugen.

Optional kann mindestens ein Beleuchtungspuls 100, vorzugsweise jeder Beleuchtungspuls 100 ein Lichtblatt 112 bzw. eine Lichtscheibe 114 bilden. Hierfür kann jeder der elektromagnetischen Strahler 106 eine auf den Beleuchtungsbereich 96 gerichtete Optik (nicht gezeigt) aufweisen.

Zum bereits oben angeführten Aufnehmen der Helligkeitswerte 28 weist die Bildsensoranordnung 12 einen Aufnahmebereich 116 auf, der sich mit dem Beleuchtungsbereich 96 überlagert. Die Bildsensoranordnung 12 ist hierbei ausgestaltet, während jedes Beleuchtungspulses 100 die Helligkeitswerte 28 im Aufnahmebereich 116 zu messen.

Wie oben bereits erwähnt, weist die Bildsensoranordnung 12 wenigstens vier im räumlichen Abstand 54 voneinander beabstandet angeordnete Pixelzeilen 52a, 52b, 52c, 52d auf. Insbesondere kann die Bildsensoranordnung 12 für jede aus der Beleuchtungssequenz 98 resultierende unterschiedliche Beleuchtungskonstellation 44, 46, 48 wenigstens eine Pixelzeile aufweisen. Dadurch wird sichergestellt, dass für jedes mehrfarbige Pixeltupel 58 auch ein mehrdirektionales Pixeltupel 60 aufgenommen werden kann, das dieselbe Stelle des Objektbereiches abbildet. Hierfür kann die Bildsensoranordnung 12 beispielsweise als eine mehrzeilige Zeilenkamera 118 (siehe Fig. 3) oder eine zeilenweise auslesbare Matrixkamera 120 (siehe Fig. 2) ausgestaltet sein. Wahlweise kann auch eine Kombination aus mehreren derartigen Kameras die Bildsensoranordnung 12 bilden.

Um die bereits erwähnte Pixelsynchronizität auf einfache Weise zu erzielen, ist vorzugsweise der zeitliche Abstand 122 zwischen zwei aufeinanderfolgenden Beleuchtungspulsen 98 der Beleuchtungssequenz 98 gleich der Zeit, während der sich die auf die Bildsensoranordnung 12 projizierte Abbildung des Objekts 14 durch die Relativgeschwindigkeit 10 um eine Strecke vorschiebt, welche dem räumlichen Abstand 54 zweier benachbarter Pixelzeilen entspricht. Um das zu erreichen, können der räumliche Abstand 54 und die Relativgeschwindigkeit 10 vorgegeben und der zeitliche Abstand 122 zwischen zwei aufeinanderfolgenden Beleuchtungspulse 100 daran angepasst sein. Beispielsweise kann diese Anpassung durch eine Ansteuerung der Beleuchtungsanordnung 90 erfolgen.

Alternativ können der räumliche Abstand 54 und der zeitliche Abstand 122 vorgegeben und die Relativgeschwindigkeit 10 daran angepasst sein. Hierfür kann das Fördergerät 92 entsprechend angesteuert werden.

Ferner alternativ können der zeitliche Abstand 122 und die Relativgeschwindigkeit 10 vorgegeben und der räumliche Abstand 54 daran angepasst sein. Der räumliche Abstand 54 lässt sich im Voraus an der Bildsensoranordnung 12 konstruktiv anpassen. Für die Matrixkamera 120 ist es auch denkbar, dass der Zeilenabstand 124 dadurch beeinflusst wird, welche Zeilen der Matrixkamera 120 ausgelesen werden. Um den räumlichen Abstand 54 zu vergrößern, kann statt jeder Pixelzeile beispielsweise nur jede zweite Pixelzeile ausgelesen werden.

Die Anzahl der Pixelzeilen der Bildsensoranordnung 12 kann wahlweise auch kleiner als die Anzahl der aus der Beleuchtungssequenz 98 resultierenden unterschiedlichen Beleuchtungskonstellationen 44, 46, 48 sein. Dies ist in Fig. 3 gezeigt. Dort weist die Bildsensoranordnung 12 vier Pixelzeilen 52a, 52b, 52c, 52d auf, während die Beleuchtungsanordnung 90 ausgestaltet ist, eine Beleuchtungssequenz mit sechs unterschiedlichen Beleuchtungskonstellationen 46, 48 auszustrahlen (siehe Draufsichten 50 in Fig. 3).

Grundsätzlich sind somit nicht genügend Pixelzeilen vorhanden, um jeden Objektbereich des bewegten Objekts 14 in jeder der sechs unterschiedlichen Beleuchtungskonstellationen 46, 48 abzulichten. Um dennoch die bereits oben erwähnte Pixelsynchronizität zumindest teilweise zu erzielen, muss der zeitliche Abstand 122 zwischen zwei aufeinanderfolgenden Beleuchtungspulsen 98 mindestens bei zwei Beleuchtungskonstellationen 46 kleiner sein, als die Zeit, während der sich die auf die Bildsensoranordnung 12 projizierte Abbildung des Objekts 14 durch die Relativgeschwindigkeit 10 um die Strecke vorschiebt, welche dem räumlichen Abstand 54 zweier benachbarter Pixelzeilen entspricht. Die Helligkeitswerte 28 für diese Beleuchtungskonstellationen 46 müssen folglich "zwischen" den Pixelzeilen aufgenommen werden. Dies ist in Fig. 3 durch die versetzt angeordneten Draufsichten 50 angedeutet. Wenn es sich um unmittelbar benachbarte Pixelzeilen handelt, können die Helligkeitswerte 28 durch eine Interpolation oder Mittelwertbildung approximiert werden. Auch bei nicht unmittelbar benachbarten Pixelzeilen kann die oben erwähnte Pixelsynchronizität hinreichend erzielt werden, wenn die "zwischengeschobenen" Beleuchtungskonstellationen 46 in möglichst kurzem zeitlichen Abstand zur jeweils vorherigen Beleuchtungskonstellation erzeugt werden und die Messung der Helligkeitswerte unverzüglich erfolgt.

In Fig. 3 ist eine imaginäre Rasterprojektion 126 dargestellt, welche die von den einzelnen Pixelzeilen 52a, 52b, 52c, 52d der Bildsensoranordnung 12 aufgenommenen Objektbereiche andeutet. Der räumliche Abstand 54 und die Pixelbreite 68 sind an der Rasterprojektion 126 angedeutet.

Als Alternative zu Pixelzeilen kann die Bildsensoranordnung 12 auch andersartige Pixelfelder aufweisen. In diesem Fall ist der Bilddatenprozessor 1 ausgestaltet, die mehrfarbigen Pixeltupel 58 und die mehrdirektionalen Pixeltupel 60 anhand von anderen, die Sensorgeometrie repräsentierenden Sensordaten 57 zu identifizieren.

Die Geschwindigkeitswerte 56 und Sensordaten 57 sind vorzugsweise konstant. Je nach Anwendung können sich die Geschwindigkeitswerte 56 und/oder Sensordaten 57 zeitlich ändern. Zum Eingeben oder Auslesen der Geschwindigkeitswerte 56 kann der Bilddatenprozessor 1 eine Schnittstelle 128 aufweisen. Über die Schnittstelle 128 kann der Bilddatenprozessor 1 an einen Drehgeber (nicht gezeigt) des Fördergeräts 92 (siehe Fig. 2) angeschlossen sein bzw. von diesem die Geschwindigkeitswerte 56 in Echtzeit empfangen. Eine weitere Schnittstelle 130 für das Eingeben oder Auslesen der Sensordaten 57 kann optional ebenfalls am Bilddatenprozessor 1 vorgesehen sein.

Die Vorrichtung 2 kann den Bilddatenprozessor 1 aufweisen. Alternativ kann die Vorrichtung 2 auch an einen Computer 132 angeschlossen werden, auf dem ein Computerprogramm ausführbar ist, das Befehle umfasst, welche den Computer 132 veranlassen, die für den Bilddatenprozessor 1 bereits beschriebenen Verfahrensschritte auszuführen.

## Patentansprüche

1. Vorrichtung (2) zum Erzeugen photometrischer Stereobilder (6) und eines Farbbildes (8) von einem mit einer vorbestimmten Relativgeschwindigkeit (10) relativ zur Vorrichtung (2) bewegten Objekt (14), wobei die Vorrichtung (2) einen Beleuchtungsbereich (96) und eine auf den Beleuchtungsbereich (96) ausgerichtete Beleuchtungsanordnung (90) aufweist, wobei die Beleuchtungsanordnung (90) ausgestaltet ist, eine Beleuchtungssequenz (98) in den Beleuchtungsbereich (96) zyklisch auszustrahlen, wobei die Beleuchtungssequenz (98) wenigstens vier Beleuchtungspulse (100) aufweist, wobei jeder Beleuchtungspuls (100) einen Wellenlängenbereich (30) und eine Beleuchtungsrichtung (34) aufweist, wobei sich mindestens drei der Beleuchtungspulse (100) durch ihre jeweiligen Wellenlängenbereiche (30) unterscheiden, wobei sich mindestens zwei der Beleuchtungspulse (100) durch ihre jeweiligen Beleuchtungsrichtungen (34) unterscheiden und wobei mindestens zwei Beleuchtungspulse (100) unterschiedlicher Beleuchtungsrichtungen (34) den gleichen Wellenlängenbereich (30) aufweisen, wobei die Vorrichtung (2) eine monochromatische Bildsensoranordnung (12) mit einem Aufnahmebereich (116) aufweist, wobei sich der Aufnahmebereich (116) der Bildsensoranordnung (12) und der Beleuchtungsbereich (96) überlagern, und wobei die Bildsensoranordnung (12) ausgestaltet ist, während jedes Beleuchtungspulses (100) Helligkeitswerte (28) im Aufnahmebereich (116) zu messen, **dadurch gekennzeichnet, dass** die Bildsensoranordnung (12) wenigstens vier in einem vorbestimmten räumlichen Abstand (54) voneinander beabstandete Pixelfelder (52) aufweist, wobei der zeitliche Abstand (122) zwischen zwei aufeinanderfolgenden Beleuchtungspulsen (100) der Beleuchtungssequenz (98) kleiner gleich der Zeit ist, während der sich eine auf die Bildsensoranordnung (12) projizierte Abbildung des Objekts (14) durch die Relativgeschwindigkeit (10) um eine Strecke vorschiebt, welche dem räumlichen Abstand (54) zweier benachbarter Pixelfelder (52) entspricht.

2. Vorrichtung (2) nach Anspruch 1, wobei mindestens zwei Beleuchtungspulse (100) unterschiedlicher Wellenlängenbereiche (30) die gleiche Beleuchtungsrichtung (34) aufweisen.

3. Vorrichtung (2) nach Anspruch 1 oder 2, wobei die Wellenlängenbereiche (30) der Beleuchtungspulse (100) einen RGB-Farbraum abdecken.

4. Vorrichtung (2) nach einem der Ansprüche 1 bis 3, wobei mindestens ein Beleuchtungspuls (100) ein Lichtblatt (112) bildet.

5. Vorrichtung (2) nach Anspruch 1, wobei die Bildsensoranordnung als eine mehrzeilige Zeilenkamera oder eine zeilenweise auslesbare Matrixkamera ausgestaltet ist.

6. Verfahren zum Erzeugen photometrischer Stereobilder (6) und eines Farbbildes (8) von einem Objekt (14), wobei das Verfahren die nachfolgenden Schritte aufweist:
- zyklisches Ausleuchten eines Beleuchtungsbereiches (96), in dem sich das Objekt (14) befindet, mit einer Beleuchtungssequenz (98), wobei die Beleuchtungssequenz (98) wenigstens vier Beleuchtungspulse (100) aufweist, wobei jeder Beleuchtungspuls (100) einen Wellenlängenbereich (30) und eine Beleuchtungsrichtung (34) aufweist, wobei sich mindestens drei der Beleuchtungspulse (100) durch ihre jeweiligen Wellenlängenbereiche (30) unterscheiden, wobei sich mindestens zwei der Beleuchtungspulse (100) durch ihre jeweiligen Beleuchtungsrichtungen (34) unterscheiden und diese den gleichen Wellenlängenbereich (30) aufweisen,
wobei der Verfahrensschritt des Ausleuchtens umfasst:
▪ Ausstrahlen eines Beleuchtungspulses (100) in einem ersten Wellenlängenbereich (30a) aus einer ersten Beleuchtungsrichtung (34a), aus einer zweiten Beleuchtungsrichtung (34b), aus einer dritten Beleuchtungsrichtung (34c) und aus einer vierten Beleuchtungsrichtung (34d),
▪ Ausstrahlen eines Beleuchtungspulses (100) in einem zweiten Wellenbereich (30b) aus jeder der ersten, zweiten, dritten und vierten Beleuchtungsrichtung (34a, 34b, 34c, 34d) und
▪ Ausstrahlen eines Beleuchtungspulses (100) in einem dritten Wellenlängenbereich (30c) aus jeder der ersten, zweiten, dritten und vierten Beleuchtungsrichtung (34a, 34b, 34c, 34d) umfasst, wobei der erste, zweite und dritte Wellenlängenbereich (30a, 30b, 30c) untereinander nicht deckungsgleich sind, und wobei die erste, zweite, dritte und vierte Beleuchtungsrichtung (34a, 34b, 34c, 34d) untereinander nicht parallel sind,
- Bewegen des Objekts (14) durch den Beleuchtungsbereich (96) und durch einen mit dem Beleuchtungsbereich (96) überlagerten Aufnahmebereich (116) einer monochromatischen Bildsensoranordnung (12) und
- Aufnehmen von Helligkeitswerten (28) im Aufnahmebereich (116) der monochromatischen Bildsensoranordnung (12) während jedes Beleuchtungspulses (100), **gekennzeichnet durch**:
- Bereitstellen der monochromatischen Bildsensoranordnung (12) mit wenigstens vier in einem vorbestimmten räumlichen Abstand (54) voneinander beabstandeten Pixelfeldern (52), wobei der zeitliche Abstand (122) zwischen zwei aufeinanderfolgenden Beleuchtungspulsen (100) der Beleuchtungssequenz (98) kleiner gleich der Zeit gewählt wird, während der sich eine auf die Bildsensoranordnung (12) projizierte Abbildung des Objekts (14) durch die Relativgeschwindigkeit (10) um eine Strecke vorschiebt, welche dem räumlichen Abstand (54) zweier benachbarter Pixelfelder (52) entspricht.

7. Verfahren nach Anspruch 6, wobei mindestens zwei Beleuchtungspulse (100) im gleichen Wellenlängenbereich (30) zeitgleich ausgestrahlt werden, und wobei mindestens zwei weitere Beleuchtungspulse (100) im gleichen Wellenlängenbereich (30) zeitgleich ausgestrahlt werden.

8. Verfahren nach Anspruch 6 oder 7, wobei vier Beleuchtungspulse (100) im gleichen Wellenlängenbereich (30) zeitgleich ausgestrahlt werden, wobei vier weitere Beleuchtungspulse (100) im gleichen Wellenlängenbereich zeitgleich ausgestrahlt werden, und wobei die restlichen Beleuchtungspulse (100) zeitgleich oder nacheinander ausgestrahlt werden.

## Claims

1. Device (2) for generating photometric stereo images (6) and one color image (8) of an object (14) moved by a predefined relative speed (10) relative to the device (2), whereby the device (2) has a lighting area (96) and a lighting arrangement (90) oriented to the lighting area (96), whereby the lighting arrangement (90) is designed to cyclically emit a lighting sequence (98) in the lighting area (96), whereby the lighting sequence (98) has at least four lighting pulses (100), whereby every lighting pulse (100) has a wavelength range (30) and a lighting direction (34), whereby at least three of the lighting pulses (100) are distinguished by their respective wavelength range (30), whereby at least two of the lighting pulses (100) are distinguished by their respective lighting directions (34) and whereby at least two lighting pulses (100) of different lighting directions (34) having the same wavelength range (30), whereby the device (2) comprises a monochromatic image sensor arrangement (12) with a capture area (116), whereby the capture area (116) of the image sensor arrangement (12) overlaps with the lighting area (96), and whereby the image sensor arrangement (12) is configured to measure brightness values (28) in the capture area (116) during each lighting pulse (100), **characterized in that** the image sensor arrangement (12) has at least four pixel fields (52) spaced apart from one another by a predefined spatial distance (54), whereby the temporal interval (122) between two consecutive lighting pulses (100) of the lighting sequence (98) is less than or equal to the time during which an image of the object (14) projected onto the image sensor arrangement (12) shifts, due to the relative speed (10), by a distance corresponding to the spatial distance (54) between two adjacent neighboring pixel fields (52).

2. Device (2) according to Claim 1, whereby at least two lighting pulses (100) of different wavelength ranges (30) have the same lighting direction (34).

3. Device (2) according to Claim 1 or 2, whereby the wavelength ranges (30) of the lighting pulses (100) correspond to an RGB color space.

4. Device (2) according to one of the Claims 1 to 3, whereby at least one lighting pulse (100) forms a light sheet (112).

5. Device (2) according to Claim 1, whereby the image sensor arrangement can be designed as a multiline linescan camera or a matrix camera which can be read out line by line.

6. Method for generating photometric stereo images (6) and one color image (8) of an object (14), whereby the method comprises the following steps:
- cyclic illumination of a lighting area (96) in which the object (14) is located, with a lighting sequence (98), whereby the lighting sequence (98) has at least four lighting pulses (100), whereby each lighting pulse (100) has a wavelength range (30) and a lighting direction (34), whereby at least three of the lighting pulses (100) are differentiated by their respective wavelength ranges (30), whereby at least two lighting pulses (100) are distinguished by their respective lighting directions (34) and have the same wavelength range (30),
whereby the illumination method step comprises:
▪ emitting a lighting pulse (100) in a first wavelength range (30a) from a first lighting direction (34a), from a second lighting direction (34b), from a third lighting direction (34c) and from a fourth lighting direction (34d),
▪ emitting a lighting pulse (100) in a second wavelength range (30b) from each of the first, second, third and fourth lighting direction (34a, 34b, 34c, 34d), and
▪ emitting a lighting pulse (100) in a third wavelength range (30c) from each of the first, second, third and fourth lighting direction (34a, 34b, 34c, 34d), whereby the first, second and third wavelength range (30a, 30b, 30c) are not congruent with on another, and whereby the first, second, third and fourth lighting direction (34a, 34b, 34c, 34d) are not parallel with one another,
- moving the object (14) through the lighting area (96) and through a recording area (116) superimposed by the lighting area (96) of a monochromatic image sensor arrangement (12) and
- recording brightness values (28) in the recording area (116) of the monochromatic image sensor arrangement (12) during each lighting pulse (100), **characterized by**:
- providing the monochromatic image sensor arrangement (12) with at least four pixel fields (52) spaced apart from each other at a predefined spatial distance (54), whereby the time interval (122) between two consecutive lighting pulses (100) of the lighting sequence (98) is selected smaller/equal the time during which one picture of the object (14) projected onto the image sensor arrangement (12) pushes forward by means of the relative speed (10) by a distance which is equivalent to the spatial distance (54) of two neighboring pixel fields (52).

7. Method according to Claim 6, whereby at least two lighting pulses (100) are emitted simultaneously in the same wavelength range (30) and whereby at least two additional lighting pulses (100) are emitted simultaneously in the same wavelength range (30).

8. Method according to Claim 6 or 7, whereby four lighting pulses (100) are simultaneously emitted in the same wavelength range (30), whereby four additional lighting pulses (100) are simultaneously emitted in the same wavelength range, and whereby the remaining lighting pulses (100) are emitted simultaneously or consecutively.

## Revendications

1. Dispositif (2) pour générer des images stéréos photométriques (6) et une image en couleurs (8) d'un objet (14) en mouvement à une vitesse (10) relative prédéterminée par rapport au dispositif (2), le dispositif (2) présentant une zone d'éclairage (96) et une disposition d'éclairage (90) orientée sur la zone d'éclairage (96), la disposition d'éclairage (90) étant conçue pour éclairer de manière cyclique une séquence d'éclairage (98) vers la zone d'éclairage (96), la séquence d'éclairage (98) présentant au moins quatre impulsions d'éclairage (100), chaque impulsion d'éclairage (100) présentant une plage de longueurs d'onde (30) et une direction d'éclairage (34), au moins trois des impulsions d'éclairage (100) étant différentes par leurs plages de longueurs d'onde (30) respectives, au moins deux des impulsions d'éclairage (100) étant différentes par leur directions d'éclairage respectives et au moins deux des impulsions d'éclairage (100) de directions d'éclairage (34) différentes présentant la même plage de longueurs d'onde (30), le dispositif (2) présentant une disposition du capteur d'image monochromatique (12) avec une zone de capture (116), la zone de capture (116) de la disposition du capteur d'image monochromatique (12) et la zone d'éclairage (96) se superposant, la disposition du capteur d'image (12) étant conçue pour mesurer les valeurs de luminosité (28) dans la zone de capture (116) à chaque impulsion d'éclairage (100) qui est conçue de telle sorte que la disposition du capteur d'image (12) présente au moins quatre champs de pixels (52) espacés les uns des autres à une distance spatiale (54) prédéterminée, l'écart temporel (122) entre deux impulsions d'éclairage (100) consécutives de la séquence d'éclairage (98) étant plus petit ou égal à la durée pendant laquelle une représentation de l'objet (14) projetée sur la disposition du capteur d'image (12) avance d'une longueur grâce à la vitesse relative (10) correspondant à la distance spatiale (54) de deux champs de pixels (52) voisins.

2. Dispositif (2) selon la revendication 1, au moins deux impulsions d'éclairage (100) de différentes plages de longueurs d'onde (30) présentant la même direction d'éclairage (34).

3. Dispositif (2) selon la revendication 1 ou 2, les plages de longueurs d'onde (30) des impulsions d'éclairage (100) couvrant un espace colorimétrique RGB.

4. Dispositif (2) selon l'une des revendications 1 à 3, au moins une impulsion d'éclairage (100) formant un feuillet de lumière (112).

5. Dispositif (2) selon la revendication 1, la disposition du capteur d'image étant conçue comme une caméra linéaire à plusieurs lignes ou une caméra matricielle à lecture par ligne.

6. Procédé pour générer des images stéréos photométriques (6) et une image en couleurs (8) d'un objet (14), le procédé présentant les étapes suivantes :
- l'éclairage cyclique d'une zone d'éclairage (96) dans laquelle se trouve l'objet (14), avec une séquence d'éclairage (98), la séquence d'éclairage (98) présentant au moins quatre impulsions d'éclairage (100), chaque impulsion d'éclairage (100) présentant une plage de longueurs d'onde (30) et une direction d'éclairage (34), au moins trois des impulsions d'éclairage (100) étant au moins différentes par leurs plages de longueurs d'onde (30), au moins deux des impulsions d'éclairage (100) étant différentes par leurs directions d'éclairage (34) et celles-ci présentant la même plage de longueurs d'onde (30),
l'étape du procédé de l'éclairage comprenant :
▪ l'éclairage d'une impulsion d'éclairage (100) dans une première plage de longueurs d'onde (30a) d'une première direction d'éclairage (34a), d'une deuxième direction d'éclairage (34b), d'une troisième direction d'éclairage (34c) et d'une quatrième direction d'éclairage (34d),
▪ l'éclairage d'une impulsion d'éclairage (100) dans une deuxième plage de longueurs d'onde (30b) d'une première, d'une deuxième, d'une troisième et d'une quatrième direction d'éclairage (34a, 34b, 34c, 34d) et
▪ l'éclairage d'une impulsion d'éclairage (100) dans une troisième plage de longueurs d'onde (30c) de chacune de la première, de la deuxième, de la troisième et de la quatrième direction d'éclairage (34a, 34b, 34c, 34d), la première, la deuxième et la troisième plage de longueurs d'onde (30a, 30b, 30c) n'étant pas conformes entre elles et la première, la deuxième, la troisième et la quatrième direction d'éclairage (34a, 34b, 34c, 34d) n'étant pas parallèles les unes par rapports aux autres,
- le déplacement de l'objet (14) à travers la zone d'éclairage (96) et à travers une zone de capture (116) superposée d'une disposition du capteur d'image monochromatique (12) et
- la capture des valeurs de luminosité (28) dans la zone de capture (116) de la disposition du capteur d'image monochromatique (12) pendant chaque impulsion d'éclairage (100), **caractérisée par** :
- la fourniture de la disposition du capteur d'image monochromatique (12) avec au moins quatre champs de pixels (52) espacés les uns des autres à une distance spatiale (54) prédéterminée, l'écart temporel (122) entre deux impulsions d'éclairage (100) consécutives de la séquence d'éclairage (98) étant sélectionné plus petit ou égal à la durée pendant laquelle une représentation de l'objet (14) projetée sur la disposition du capteur d'image (12) avance d'une longueur grâce à la vitesse relative (10) correspondant à la distance spatiale (54) de deux champs de pixels (52) voisins.

7. Procédé selon la revendication 6, au moins deux impulsions d'éclairage (100) étant émises simultanément dans la même plage de longueurs d'onde (30) et au moins deux autres impulsions d'éclairage (100) étant émises simultanément dans la même plage de longueurs d'onde (30).

8. Procédé selon la revendication 6 ou 7, quatre impulsions d'éclairage (100) étant émises simultanément dans la même plage de longueurs d'onde (30), quatre autres impulsions d'éclairage (100) étant émises simultanément dans la même plage de longueurs d'onde et les autres impulsions d'éclairage (100) étant émises simultanément ou l'une après l'autre.
